# EUROPEAN PATENT SPECIFICATION

(11) **EP 0 582 354 B1**
(45) Date of publication and mention of the grant of the patent: **13.11.1996**
(21) Application number: 93202319.5
(22) Date of filing: 05.08.1993
(51) Int. Cl.: F16L 3/12, F16L 55/033

(54) **A method for fastening a pipe in a vertical position to a wall**
Verfahren zur Befestigung eines Rohres in vertikaler Lage an einer Wand
Méthode pour la fixation d'un conduit en position verticale sur un mur

(30) Priority: 05.08.1992 NL 9201410; 23.03.1993 NL 9300521
(43) Date of publication of application: 09.02.1994
(73) Proprietor: J. van Walraven B.V., NL-3641 RK Mijdrecht (NL)
(72) Inventor: van Walraven, Jan, NL-3641 GP Mijdrecht (NL)
(74) Representative: Boelsma, Gerben Harm, Ir.

(56) References cited:
- EP-A- 0 413 883
- EP-A- 0 508 085
- US-A- 3 856 245

## Description

The invention relates to a method as defined in the first part of claim 1.

When suspending pipes or conduits in a rather vertical position to a wall, such as fall pipes for rainwater and similar pipes to vertical walls of buildings it has been usual to suspend such pipes at a certain distance from the wall by means of a pipe clip that is formed of a metal strip and that is provided with a shock absorbing liner. Such pipe clips are disclosed in DE-3439418, EP-A-0188649, EP-A-0387966 and DE-A-3708065. The pipe clip is usually screwed - by means of a nut welded to it - onto the free end of a threaded rod or the like extending from the support wall. The fastening has to be such, that the pipe is prevented from sinking through the fastening clip by gravity. Therefore it has been common practise to clamp the fastening clip rather tightly around the pipe. As a result of this the liner is compressed between pipe and pipe clip to an extent, that the absorbing effect of the liner with respect to (sound) vibrations within the pipe (which may e.g. caused by rainwater flowing therethrough) becomes insufficient. The sound connected with the water falling through the pipe may then easily penetrate through the pipe fastening into the space behind the respective supporting wall.

In practise it has also been known to fasten a pipe to a wall in a vertical position by proceeding along the lines of the first part of claim 1 (page 4 from the catalogue of the firm AKO Rohre Systeme Technologien GmbH & Co. KG of 1 July 1989). With this well-known method a flat ring-shaped element of rubber is applied to the downwardly facing surface of the collar after which the pipe to be fastened is inserted through the ring-shaped support body so as to have the pipe with said collar seated onto the upper side of said ring-shaped support body via said rubber element.

It is to be noted that prior EP-A-0508085 (vide fig. 3 in particular) discloses a similar method for fastening a pipe to a wall in a substantially vertical position and in a shock and sound absorbing manner. More particularly with this prior proposal a special pipe clip is used, which is formed from a channel profile. In use, with the clip body loosely surrounding the pipe, the channel is facing with its opening upwardly and contains shock absorbing material to resiliently support the collar on the pipe.

The present invention aims at providing a solution for the problem above referred to, by improviving the well-known method.

This aim is achieved by the features of the second part of claim 1.

In this manner the absorbing function of the liner of a universal fastening clip attached to the wall may be completely exploited, whereas on the other hand a shock absorbing support of the pipe is obtained on the upper edge of the fastening clip by which it is loosely surrounded.

The supporting function and the spacing and guiding function of the fastening clip have become separated, so that it is no longer necessary to fixedly clamp the clip with its liner about the pipe.

In a preferred embodiment a second, similar pipe clip, which remains free from the supporting wall, is clamped around the pipe to function as a support collar.

The invention also relates to a pipe-clip of the type according to the first part of claim 3.

Such a pipe-clip is disclosed in EP-A-34 39 418 and is usually applied in cases, where the pipe or conduit to be fastened, mostly in a horizontal position, has to be suspended from a wall in a rather vibration- or shockfree manner. At projections of the liner, which extend laterally (axially) from the upstanding edge portion(s) engaging the edge(s) of the circular clip body are formed by thickenings at the transition(s) between the web of the liner and the edge portion(s) extending at right angles to it.

It is also an object of the invention to improve a pipe-clip with a liner of the latter type in such a way that, when it is used for fastening a vertical pipe, it may also function as a vibration-cushioning support for a support collar to be applied about the pipe.

In accordance with the invention this aim is achieved by the features defined in the second part of claim 3.

When using a pipe-clip equipped with a liner thus formed for suspending a vertical pipe or conduit the projections provided in accordance with the invention will become facing upwardly so that they function as a vibration-damping basis for a support ring or flange (to be) provided around the pipe to be suspended.

In a practical embodiment two spaced projections are provided to form the said projections.

In a preferred embodiment the two circumferentially extending ribs are unitedd to form a hollow profile.

Further features and adwantages of the invention will be hereinafter further explained by way of two examples with reference to the drawing.
Fig. 1 shows a pipe clip fastened to a wall in accordance with the invention, together with a pipe section carried by it, one half being shown in a side elevational view and the other half being shown in longitudinal section;
fig. 2 shows a modification of the the embodiment of fig. 1;
fig. 3 is a cross-section on an enlarged scale of the liner used with the pipe fastening according to fig. 1 and 2.

With reference to the drawing 1 is a pipe clip of a well-known type per se. The fastening clip has an annular clip body 2 which is usually formed of metal and the flanged ends 3, 4 (shown to the front) of which may be tightened by means of a clamping screw 5 so as to clamp the clip more or less tightly around the pipe 6 to be suspended.

The annular clip body 2 often consists of two halfs, which in the example shown are hingedly connected behind the pipe 6. A second flange connection at that location, however, is also possible.

On the outer side of (one of the two parts of) the clip body 2 a nut 7 is provided as by welding, by means of which the clip is threadingly engaged on the end of a threaded rod 9 that is attached to the supporting wall 8.

The pipe clip 1 is provided with a liner 10 which extends along the inner circumferential surface of the clip body. This liner, an enlarged cross-section of which is shown in fig. 3, consists in a well-known manner of a strip of flexible rubber or the like. This rubber strip engages the edges of the clip body 2 through upstanding and inwardly projecting longitudinal edge portions 10a and 10b respectively; furthermore it is provided, at its face turned towards the pipe to be suspended, with ribs 10c which circumferentially extend in the assembled state.

The liner 10 also comprises outwardly extending projections 10d which extend radially from the upstanding edge portions 10a and are formed - in the example shown - by two spaced ribs. The thickness of these ribs substantially corresponds with that of the easily flexing inwardly projecting edge portions 10b, whereas the height of the ribs is in the order of twice the rib thickness.

The fastening clip 1 equipped with the liner as described hereinabove is applied about the tube 6 (which may be formed of e.g. plastics material) rather "loosely", i.e. not tight enough to prevent the pipe from sliding through the clip downwardly under gravity. generally speaking there is hardly any contact between the ribs 10c and the pipe 6. In order to secure such a loose enclosure of the pipe 6 a filling washer 11 may be provided between the flanges 3 and 4, as known per se from EP-A-0387966.

Yet the suspended pipe is locked in place, i.e. is prevented from sinking through the clip, by having the ribs 10d, which in use are facing upwardly, function as an annular bearing for a supporting rim or flange 12 that is fixedly connected about the pipe 6. Tests have shown that with a (fall) pipe suspended in the above manner a surprisingly good sound damping effect is obtained from the liner according to the invention.

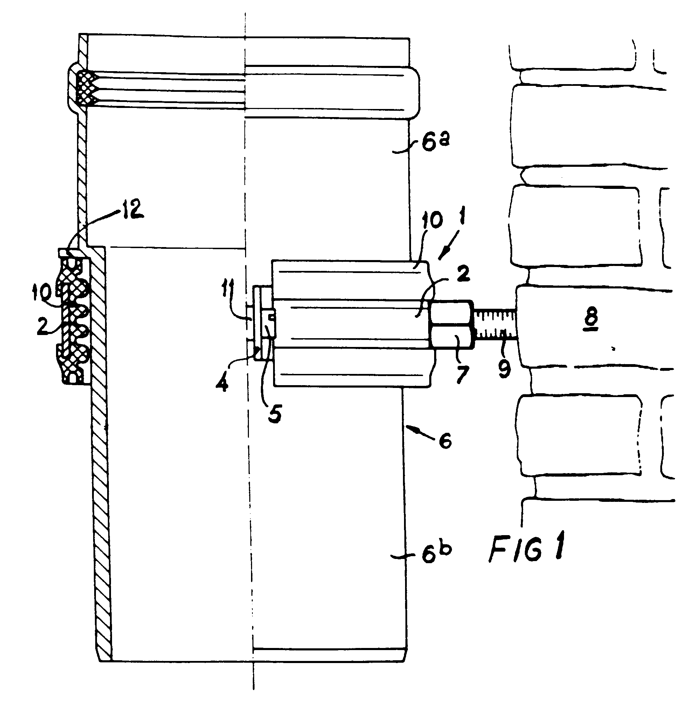

In the example of fig. 1 the collar 12 is integrally formed with the pipe 6. In fact fig. 1 shows a connecting socket with a support flange integrally formed therewith and formed of a plastic material that is typical for this type of pipes. The flange 12 is formed at the transition between an upper socket portion 6a adapted to receive an upper pipe section and a lower spigot portion 6b adapted to be inserted in a lower pipe section.

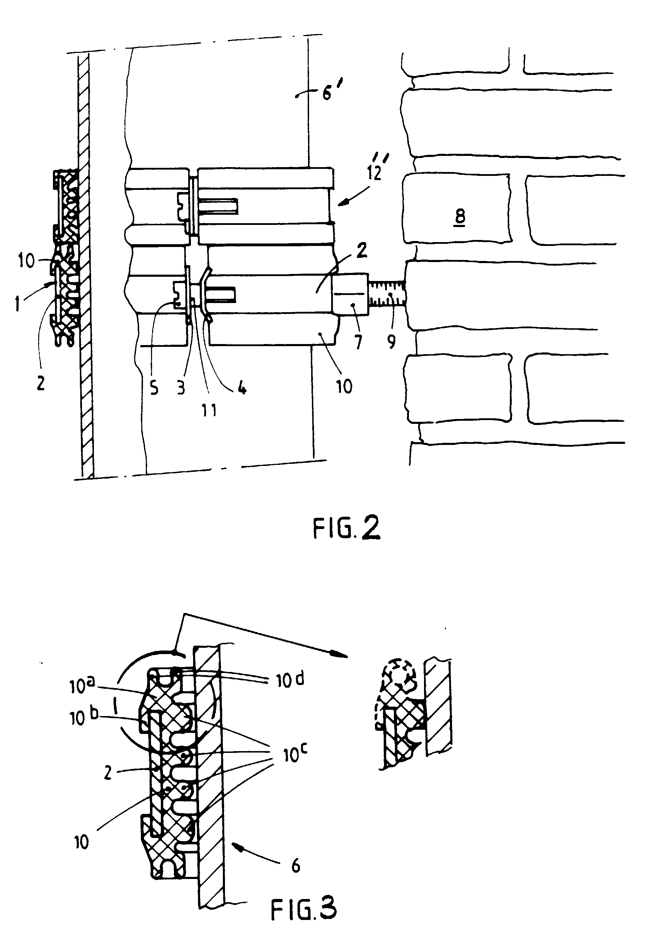

In fig. 2 a normal, continuous fall pipe is shown, around which pipe clips of a well-known type are fixedly clamped at radially spaced locations to function as supporting rim or collar 12' and to remain free from the wall. The clip body of such a fastening clip may have the same size of that of the pipe clip 1. However, no use is made of a filling washer 11 when clamping the clip 1' around the pipe 6'. It is an advantage of this second embodiment that the pipe to be suspended may initially positioned relative to the supporting wall in the horizontal direction, while being loosely enclosed by the clips attaching the pipe to the wall the pipe is then positioned in the height direction and finally the clips 12' are applied about the pipe and rigidly clamped. This avoids the need of determining the exact fastening locations in advance.

The projections 10d, which contribute to the vibration damping effect of the liner 10, may be united to a rounded hollow profile, such as indicated by the dash lines in fig. 3. The liner of the auxiliary clip functioning as a support collar 12' could be correspondingly shaped, in which case the two liners would be supported one on the other with the intermediary of two hollow profiles.

## Claims

1. A method for fastening a pipe (6) to a wall (8) in a substantially vertical position and in a shock and sound absorbing manner, comprising the of:
fastening a generally circular pipe support body (2) to the supporting wall, selecting the size of said support body so as to allow the pipe (6) to be slidably surrounded by said body (2) without being contacted by it;
providing the pipe (6) with a fixed collar (12; 12') and placing the pipe (6) substantially coaxially within said support body (2) and with a sound absorbing means (10d) interposed between the upwardly facing edge formation of the support body (2) and said collar (12; 12'),
characterized by the use of a pipe support body in the form of a pipe clip of a type formed of a metal strip and that is provided - at its inner circumferential surface facing towards the pipe - with a shock and sound absorbing liner (10) of an elastomeric material, said liner having an edge portion (10a) that engages the upwardly facing edge of the clip body strip (2) and is integrally formed with said shock and sound absorbing means (10d) the latter being in the shape of flexible projections (10d) which extend axially and upwardly from said edge portion (10a) and having a length which is in the order of twice of its thickness.

2. A method according to claim 1, characterized in that a second, similar pipe clip (12), which remains free from the supporting wall, is clamped around the pipe to function as a collar.

3. A pipe clip (2) for fastening a pipe to a wall, comprising a shock absorbing liner (10) of the type comprising a strip of flexible rubber material or similar elastomeric material, having along at least one of its longitudinal edges an upstanding edge portion (10a) and a flexible portion (10b) extending therefrom inwardly to engage around an edge of the circular body of the pipe clip, projections (10d) being provided that extend laterally outwardly (= axially when mounted on a pipe clip) from said upstanding edge portion (10a), characterized in that said laterally outwardly extending protections (10d) have a thickness that substantially corresponds to that of said flexible inwardly extending portion (10b) and a length (height) which is in the order of twice said thickness.

4. A pipe clip (2) according to claim 3, characterized in that two spaced projections (10d) of the liner (10) are united to forming a hollow profile.

## Patentansprüche

1. Verfahren zum Befestigen eines Rohrs (6) an einer Wand (8) in im wesentlichen vertikaler Lage und in stoß- sowie schalldämpfender Weise mit den Schritten:
Befestigen eines im wesentlichen kreisförmigen Rohr-Trägerkörpers (2) an der tragenden Wand, Auswählen der Größe des Trägerkörpers derart, daß das Rohr (6) vom Trägerkörper (2) berührungslos und verschiebbar umgriffen werden kann;
Ausstatten des Rohrs (6) mit einem festen Kragen (12, 12') und Anordnen des Rohrs (6) im wesentlichen koaxial innerhalb des Trägerkörpers (2), wobei ein schalldämpfendes Mittel (10d) zwischen der aufwärts gerichteten Randausbildung des Trägerkörpers (2) und dem Kragen (12, 12') angeordnet wird,
gekennzeichnet durch die Verwendung eines Rohr-Trägerkörpers in Form einer aus einem Metallstreifen gebildeten Rohrschelle, welche an ihrer dem Rohr zugewandten inneren Umfangsfläche mit einer stoß- und schalldämpfenden Zwischenlage (10) aus elastischem Material versehen ist, die über einen Randabschnitt (10a) mit dem aufwärts gerichteten Rand des Schellenkörperstreifens (2) in Eingriff steht und einstückig mit dem stoß- und schallabsorbierenden Mittel (10d) ausgebildet ist, das die Form flexibler, sich axial und vom Randabschnitt (10a) aufwärts erstreckender Vorsprünge (10d) aufweist, deren Länge im Bereich des Zweifachen ihrer Dicke liegt.

2. Verfahren nach Anspruch 1, dadurch gekennzeichnet, daß eine zweite, ähnliche Rohrschelle (12), die von der tragenden Wand freibleibt, als Kragen um das Rohr gespannt wird.

3. Rohrschelle (2) zum Befestigen eines Rohrs an einer Wand mit einer stoßdämpfenden Zwischenlage (10) aus einem Streifen aus flexiblem Gummi oder ähnlichem elastischen Material, der entlang zumindest eines seiner Längsränder einen aufrechten Randabschnitt (10a) und einen flexiblen Abschnitt (10b) aufweist, welcher sich nach innen erstreckt, um einen Rand des kreisförmigen Körpers der Rohrschelle einzufassen, wobei Vorsprünge (10d) vorgesehen sind, welche sich vom aufrechten Randabschnitt (10a) seitlich nach außen (= axial, wenn an einer Rohrschelle festgelegt) erstrecken, dadurch gekennzeichnet, daß die sich seitlich nach außen erstreckenden Vorsprünge (10d) eine Dicke, die im wesentlichen derjenigen des sich nach innen erstreckenden flexiblen Abschnitts (10b) entspricht, sowie eine Länge (Höhe) aufweisen, welche im Bereich des Zweifachen ihrer Dicke liegt.

4. Rohrschelle (2) nach Anspruch 3, dadurch gekennzeichnet, daß zwei voneinander beabstandete Vorsprünge (10d) der Zwischenlage (10) zur Ausbildung eines Hohlprofils miteinander verbunden sind.

## Revendications

1. Procédé pour fixer un tuyau (6) à un mur (8) dans une position substantiellement verticale et d'une manière absorbant les sons et les chocs, comprenant les étapes de :
fixer un corps (2) de support de tuyau généralement circulaire au mur supportant, sélectionner la taille dudit corps de support de manière à permettre au tuyau (6) d'être entouré à coulissement par ledit corps (2) sans être touché par celui-ci ;
munir le tuyau (6) d'un collier fixe (12 ; 12') et placer le tuyau (6) substantiellement coaxialement à l'intérieur dudit corps de support (2) et avec des moyens d'absorption de sons (10d) interposés entre la formation de bords orientés vers le haut du corps de support (2) et ledit collier (12 ; 12'),
caractérisé par l'utilisation d'un corps de support de tuyau sous la forme d'une bride pour tuyau d'un type formé d'un ruban métallique et qui est munie - à sa surface circonférentielle intérieure orientée vers le tuyau - avec un chemisage (10) absorbeur de sons et de chocs d'un matériau élastomère, ledit chemisage ayant une portion de bord (10a) qui coopère avec le bord orienté vers le haut de la bande (2) de corps de bride et est venu de matière avec lesdits moyens d'absorption (10d) de sons et de chocs, ces derniers étant sous la forme de saillies flexibles (10d) qui s'étendent axialement et vers le haut depuis ladite partie de bord (10a) et ayant une longueur qui est de l'ordre du double de son épaisseur.

2. Procédé selon la revendication 1, caractérisé en ce qu'une seconde bride pour tuyau similaire (12), qui reste libre par rapport au mur supportant, est serrée autour du tuyau pour fonctionner comme un collier.

3. Bride (2) pour tuyau pour fixer un tuyau à un mur, comprenant un chemisage (10) absorbeur de chocs du type comprenant une bande de matériau en caoutchouc flexible ou matériau élastomère similaire, ayant selon au moins l'un de ses bords longitudinaux une partie (10a) de bord droit et une partie flexible (10b) s'étendant depuis celle-ci vers l'intérieur pour coopérer autour d'un bord du corps circulaire de la bride pour tuyau, des saillies (10d) étant prévues qui s'étendent latéralement vers l'extérieur (= axialement lorsque montées sur une bride pour tuyau) depuis ladite partie (10a) de bord droit, caractérisée en ce que lesdites saillies (10d) s'étendant vers l'extérieur latéralement ont une épaisseur qui correspond substantiellement à celle de ladite partie (10b) flexible s'étendant vers l'intérieur et une longueur (hauteur) qui est de l'ordre du double de ladite épaisseur.

4. Bride (2) pour tuyau selon la revendication 3, caractérisée en ce que deux saillies espacées (10d) du chemisage (10) sont conjuguées pour former un profil creux.
